# EUROPÄISCHE PATENTSCHRIFT

(11) **EP 1 318 589 B1**
(45) Veröffentlichungstag und Bekanntmachung des Hinweises auf die Patenterteilung: **13.02.2013**
(21) Anmeldenummer: 01811203.7
(22) Anmeldetag: 10.12.2001
(51) Int. Cl.: F03D 9/00, H02J 3/36, H02J 3/38

(54) **Windenenergiesystem sowie Verfahren zum Betrieb eines solchen Windenenergiesystems**
Wind energy system and method for operating such a system
Système à énergie éolienne et procédé de fonctionnement d'un tel système

(43) Veröffentlichungstag der Anmeldung: 11.06.2003
(73) Patentinhaber: ABB Schweiz AG, 5400 Baden (CH)
(72) Erfinder: Steinke, Jürgen, 79774 Albbruck (DE)
(74) Vertreter: ABB Patent Attorneys

(56) Entgegenhaltungen:
- WO-A-00/74198
- DE-A- 19 620 906

## Beschreibung

### Technisches Gebiet

Die Erfindung bezieht sich auf das Gebiet der Windenergieanlagen. Sie geht aus von einem Windenergiesystem und einem Verfahren zum Betrieb eines solchen Systems gemäss dem Oberbegriff der unabhängigen Ansprüche.

### Stand der Technik

Windenergiesysteme, wie sie heute aufgrund schwindender Energieressourcen verstärkt als alternative Energielieferanten eingesetzt werden, werden gängigerweise an Land oder vor der Küste im Meer errichtet. Ein derartiges Windenergiesystem ist in der WO 00/74198 A1 offenbart. Das Windenergiesystem weist mindestens zwei Windrotoren auf, wobei jeder Rotor mit einem Generator mechanisch verbunden ist und diesen antreibt. Jeder der Generatoren ist mit einer zugehörigen passiven Gleichrichtereinheit verbunden. Sämtliche Gleichrichtereinheiten weisen weiterhin einen Energiespeicherkreis an ihren Gleichspannungsseiten auf, wobei jeder Energiespeicherkreis durch entsprechende Induktivitäten gebildet ist. Diese Induktivitäten verursachen jedoch durch ihre grosse und aufwendige Bauweise zusätzliche Materialkosten und benötigen entsprechend viel Platz. Jedem Energiespeicherkreis ist ein Hochsetzsteller zur Anpassung des Gleichstromes der entsprechenden Gleichrichtereinheit nachgeschaltet. Die Energiespeicherkreise der WO 00/74198 A1 mit den nachgeschalteten Hochsetzstellern sind an einer Verschienung parallel geschaltet und speisen elektrische Energie in ein Übertragungssystem ein, wobei das Übertragungssystem gängigerweise als zweiphasige Sammelschiene ausgeführt ist. Für ein langes Übertragungssystem ist zur Anpassung der für eine verlustarme die Energieübertragung notwendigen hohen Gleichspannung ein DC-DC-Steller eingangsseitig vorgesehen. Das Übertragungssystem ist mit einer Netzkopplungseinrichtung verbunden, die einen durch eine Gleichspannungskapazität gebildeten Eingangskreis aufweist. Darüber hinaus ist an den Eingangskreis ein Wechselrichter der Netzkopplungseinrichtung mit seiner Gleichspannungsseite angeschlossen, wobei der Wechselrichter an seiner Wechselspannungsseite über einen Netztransformator an ein gängiges elektrisches Versorgungsnetz angekoppelt ist.

Problematisch bei einem solchen Windenergiesystem ist es, wenn ein oder mehrere Gleichrichtereinheiten und/oder der Wechselrichter der Netzkopplungseinrichtung ausfallen und das Übertragungssystem und somit alle daran verbundenen Energiespeicherkreise und der Eingangskreis der Netzkopplungseinrichtung kurzgeschlossen wird. Eine bekannte Lösung ist das aktive Kurzschliessen sämtlicher Energiespeicherkreise mittels ihrer Hochsetzsteller, insbesondere mittels eines Thyristors des entsprechenden Hochsetzstellers, und des Eingangskreises mittels des Wechselrichters. Durch den gleichzeitigen Kurzschluss verteilen sich die Kurzschlussströme gleichmässig auf sämtliche Gleichrichtereinheiten und den Wechselrichter. Die Abtrennung des elektrischen Wechselspannungsversorgungsnetzes zur Unterbrechung der Kurzschlussströme erfolgt danach durch einen gängigen Netzleistungsschalter. Bei einer defekten Gleichrichtereinheit muss diese danach abgetrennt werden, um das Windenergiesystem wieder in Betrieb setzen zu können. Jedoch muss bei einer solchen Abtrennung, insbesondere vom entsprechenden Energiespeicherkreis, die Führung des zuvor fliessenden Kurzschlussstromes bis zum erfolgten Abbremsen des zugehörigen Generators in den Stillstand beherrscht werden können. Bei dem Windenergiesystem nach der WO 00/74198 A1 ist eine solche Abtrennungsmöglichkeit vom Energiespeicherkreis nicht vorgesehen und demnach nicht möglich. Darüber hinaus muss eine schnelle Signalübertragung zu den Hochsetzstellern und dem Wechselrichter erfolgen, um den gleichzeitigen vorstehend erwähnten aktiven Kurzschluss im Falle eines Defektes einer oder mehrerer Gleichrichtereinheiten und/oder des Wechselrichters auslösen zu können. Eine solche Signalübertragung ist aber mit einem hohen Aufwand an zusätzlichen Bauteilen und Material verbunden, insbesondere falls eine solche Signalübertragung über eine lange Distanz erfolgen soll. Insgesamt ist bei einem Windenergiesystem nach der WO 00/74198 A1 bei Ausfall oder einem Defekt einer oder mehrere Gleichrichtereinheiten und/oder des Wechselrichter der Netzkopplungseinrichtung ein unterbrechungsfreier Weiterbetrieb der nicht defekten oder nicht ausgefallenen Komponenten nicht möglich.

### Darstellung der Erfindung

Aufgabe der Erfindung ist es deshalb, ein Windenergiesystem anzugeben, bei dem eine an einem Generator des Windenergiesystems angeschlossene Gleichrichtereinheit bei deren Ausfall und/oder Defekt selektiv vom Windenergiesystem abgetrennt werden kann, wobei ein unterbrechungsfreier Weiterbetrieb der restlichen Komponenten des Windenergiesystems möglich ist, und welches besonders einfach und robust aufgebaut ist und mit geringem Schaltungsaufwand realisiert werden kann. Ferner ist ein Verfahren anzugeben, mit dem das erfindungsgemässe Windenergiesystem besonders einfach und effizient betrieben werden kann. Diese Aufgaben werden durch die Merkmale des Anspruchs 1 und 11 gelöst. In den Unteransprüchen sind vorteilhafte Weiterbildungen der Erfindung angegeben.

Das erfindungsgemässe Windenergiesystem umfasst mindestens zwei mittels Windrotoren angetriebene Generatoren, wobei eine Gleichrichtereinheit für jeden Generator vorgesehen ist, an deren Eingängen der zugehörige Generator angeschlossen ist. Desweiteren weist das Windenergiesystem einen Energiespeicherkreis für jede Gleichrichtereinheit auf, wobei der Energiespeicherkreis an Ausgängen der zugehörigen Gleichrichtereinheit angeschlossen ist. Ferner ist eine erste Verschienung vorgesehen, an welcher die Energiespeicherkreise parallel verbunden sind. Mit der ersten Verschienung ist ein Übertragungssystem verbunden, wobei eine Netzkopplungseinrichtung vorgesehen ist, mit der das Übertragungssystem eingangsseitig verbunden ist. Weiterhin ist die Netzkopplungseinrichtung über einen Netztransformator an ein elektrisches Wechselspannungsversorgungsnetz angekoppelt. Erfindungsgemäss ist jede Gleichrichtereinheit als aktive Gleichrichtereinheit mit ansteuerbaren Leistungshalbleiterbauelementen ausgebildet. Ferner weist jeder Energiespeicherkreis mindestens eine Gleichspannungskapazität und in mindestens einer Verbindung zur ersten Verschienung mindestens einen ersten Schutzschalter in Form eines Halbleiterschalters auf. Mittels der aktiven Gleichrichtereinheit und des Energiespeicherkreises mit der Gleichspannungskapazität kann vorteilhaft eine Einstellung einer variablen lastunabhängigen Gleichspannung des Energiespeicherkreises durchgeführt werden. Dadurch kann die Spannung des Übertragungssystems, welches, wie vorstehend erwähnt, über die erste Verschienung mit den Energiespeicherkreisen verbunden ist, erhöht werden, so dass sich die elektrische Verlustleistung vorteilhaft insbesondere bei einem Übertragungssystem, welches sich beispielsweise über eine lange Distanz erstreckt, reduzieren lässt. Darüber hinaus kann im Falle eines Defektes und/oder Ausfalls einer oder mehrerer Gleichrichtereinheiten ein über dem maximal zulässigen Stromwert liegender Stromfluss von der ersten Verschienung in den jeweiligen Energiespeicherkreis und/oder ein Stromfluss vom Energiespeicherkreis in die erste Verschienung mit dem jeweiligen ersten Schutzschalter in gewünschter Weise unterbrochen werden. Durch diese Unterbrechung erfolgt eine schnelle selektive Abtrennung der entsprechenden Gleichrichtereinheit vom Windenergiesystem, so dass vorteilhaft ein unterbrechungsfreier Weiterbetrieb der restlichen Komponenten des Windenergiesystems ermöglicht werden kann. Der erste Schutzschalter in Form des Halbleiterschalters bleibt dabei vorteilhaft frei von einer Beschädigung oder Zerstörung.

Weiterhin kommt das Windenergiesystem mit einer minimalen Anzahl an Komponenten aus, benötigt insbesondere wegen des Einsatzes von Gleichspannungskapazitäten für die Energiespeicherkreise wenig Platz und kann mit einem geringen Mass an Schaltungsaufwand realisiert werden. Zudem gestaltet sich das Windenergiesystem nach der Erfindung aufgrund des einfachen Aufbaus und der wenigen Komponenten als sehr wartungs- und reparaturfreundlich und ist zudem sehr robust.

Beim erfindungsgemässen Verfahren zum Betrieb des Windenergiesystems wird durch die mindestens zwei mittels Windrotoren angetriebenen Generatoren elektrische Energie zur Einspeisung in das elektrische Wechselspannungsversorgungsnetz erzeugt. Erfindungsgemäss wird bei Eintreten eines Defektes und oder Ausfalls an einer der Gleichrichtereinheiten der oder die zugehörigen ersten Schutzschalter geöffnet. Dadurch, dass der oder die zugehörigen ersten Schutzschalter bei Defekt beziehungsweise Ausfall einer Gleichrichtereinheit geöffnet werden, wird die entsprechende Gleichrichtereinheit einfach und schnell vom Windenergiesystem abgetrennt, so dass das Windenergiesystem vorteilhaft unterbrechungsfrei weiterbetrieben werden kann. Damit ermöglicht das erfindungsgemässe Verfahren einen besonders effizienten Betrieb des Windenergiesystems, wobei zudem eine sehr hohe Verfügbarkeit des Windenergiesystems erreicht werden kann.

Diese und weitere Aufgaben, Vorteile und Merkmale der vorliegenden Erfindung werden aus der nachfolgenden detaillierten Beschreibung von bevorzugten Ausführungsbeispielen der Erfindung in Verbindung mit der Zeichnung offensichtlich.

### Kurze Beschreibung der Zeichnungen

Es zeigt:

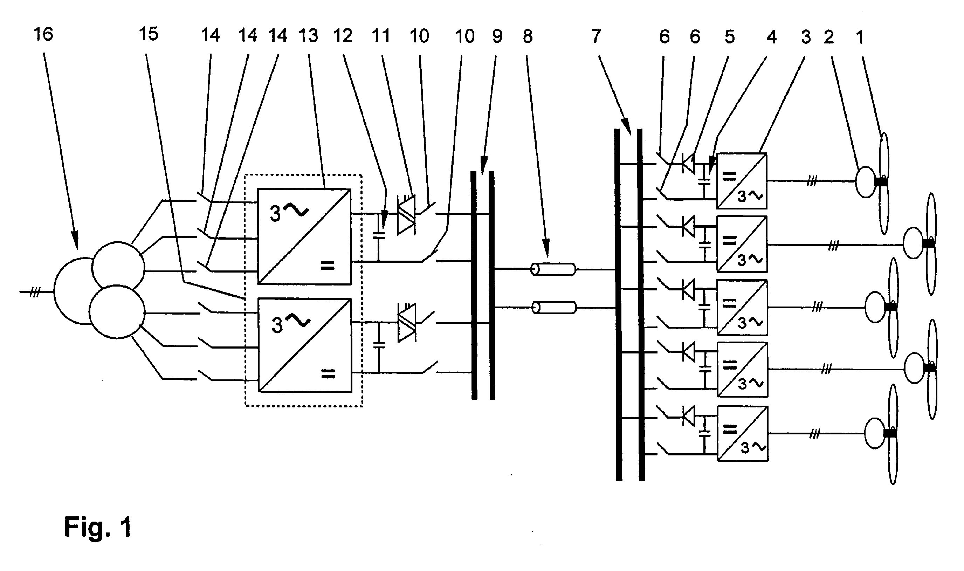

- Fig. 1: eine Ausführungsform eines erfindungsgemässen Windenergiesystems.

Die in der Zeichnung verwendeten Bezugszeichen und deren Bedeutung sind in der Bezugszeichenliste zusammengefasst aufgelistet. Grundsätzlich sind in der Figur gleiche Teile mit gleichen Bezugszeichen versehen. Die beschriebene Ausführungsform steht beispielhaft für den Erfindungsgegenstand und hat keine beschränkende Wirkung.

### Wege zur Ausführung der Erfindung

In Fig. 1 ist eine Ausführungsform eines erfindungsgemässen Windenergiesystems dargestellt. Das Windenergiesystem umfasst mindestens zwei mittels Windrotoren 1 angetriebene Generatoren 2. Desweiteren ist für jeden dieser Generatoren 2 eine Gleichrichtereinheit 3 vorgesehen, an deren Eingängen, insbesondere an Wechselspannungseingängen der zugehörige Generator 2 angeschlossen ist. Jede Gleichrichtereinheit 3 weist einen Energiespeicherkreis 4 auf, der an Ausgängen, insbesondere an Gleichspannungsausgängen der zugehörigen Gleichrichtereinheit 3 angeschlossen ist. Gemäss Fig. 1 sind sämtliche Energiespeicherkreise 4 parallel an einer ersten Verschienung 7 verbunden, wobei an der ersten Verschienung 7 zudem ein Übertragungssystem 8 verbunden ist. Darüber hinaus ist gemäss Fig. 1 eine Netzkopplungseinrichtung 15 vorgesehen, mit der das Übertragungssystem 8 eingangsseitig verbunden ist. Die Netzkopplungseinrichtung 15 ist nach Fig. 1 über einen Netztransformator 16 an ein der Übersichtlichkeit halber nicht dargestelltes elektrisches Wechselspannungsversorgungsnetz angekoppelt.

Erfindungsgemäss ist jede Gleichrichtereinheit als aktive Gleichrichtereinheit mit ansteuerbaren Leistungshalbleiterbauelementen ausgebildet und jeder Energiespeicherkreis 4 weist zudem mindestens eine Gleichspannungskapazität auf, wodurch mittels der zugehörigen aktiven Gleichrichtereinheit 3 vorteilhaft eine Einstellung einer variablen lastunabhängigen Gleichspannung des jeweiligen Energiespeicherkreises 4 durchgeführt werden. Damit ist es möglich, die Spannung des Übertragungssystems 8 zu erhöhen. Insbesondere bei einem Übertragungssystem 8, welches sich beispielsweise bei einer Offshore-Anwendung des Windenergiesystems über eine lange Distanz erstreckt, kann mit einer solchen Spannungserhöhung die elektrische Verlustleistung besonders effizient reduziert werden. Auf einen Hochsetzsteller, wie aus dem Stand der Technik bekannt, kann hierdurch vorteilhaft verzichtet werden. Ein DC-DC-Steller mit einer aufwendigen Ansteuerung für eine grosse Spannungserhöhung, wie ebenfalls aus dem Stand der Technik bekannt, kann ebenfalls vorteilhaft eingespart werden und braucht nur optional bei äusserst langen Übertragungsstrecken eingesetzt zu werden.

Desweiteren weist jeder Energiespeicherkreis 4 erfindungsgemäss in mindestens einer Verbindung zur ersten Verschienung 7 mindestens einen ersten Schutzschalter 5 in Form eines Halbleiterschalters auf. Im Falle eines Defektes und/oder Ausfalls einer oder mehrerer Gleichrichtereinheiten 3 kann ein über dem maximal zulässigen Stromwert liegender Stromfluss von der ersten Verschienung 7 in den jeweiligen Energiespeicherkreis 4 und/oder ein Stromfluss vom Energiespeicherkreis 4 in die erste Verschienung 7 mit dem jeweiligen ersten Schutzschalter 5 in gewünschter Weise schnell unterbrochen werden, wodurch eine selektive Abtrennung der entsprechenden Gleichrichtereinheit 3 vom Windenergiesystem erfolgt. Dadurch ist vorteilhaft ein unterbrechungsfreier Weiterbetrieb der restlichen Komponenten des Windenergiesystems möglich.

Gemäss Fig. 1 ist der erste Schutzschalter 5 vorzugsweise als Halbleiterdiode ausgebildet. Hierdurch kann der Schaltungs- und Steuerungsaufwand entsprechend verringert werden, da der erste Schutzschalter 5 keine aufwendige Ansteuerung benötigt.

Ferner weist jeder Energiespeicherkreis 4 gemäss Fig. 1 in jeder Verbindung zur ersten Verschienung 7 mindestens ein erstes Trennmittel 6 auf, wobei die ersten Trennmittel 6, z.B. in Form eines mechanischen Schalters, der galvanischen Trennung des Energiespeicherkreises 4 von der ersten Verschienung 7 dienen. Mit diesen ersten Trennmitteln 6 ist es somit vorteilhaft möglich, die defekte Gleichrichtereinheit 3 galvanisch vom Windenergiesystem, insbesondere von der ersten Verschienung 7 abzutrennen. Vorzugsweise sind die ersten Trennmittel 6 zum Trennen eines nahezu stromlosen Zustandes ausgelegt und von Hand betätigbar, so dass der Schaltungs- und Steuerungsaufwand gering gehalten werden kann.

Erfindungsgemäss ist die Netzkopplungseinrichtung 15 gemäss Fig. 1 über eine zweite Verschienung 9 mit dem Übertragungssystem 8 verbunden. Die Netzkopplungseinrichtung 15 weist weiterhin mindestens einen Wechselrichter 13 und je einen Eingangskreis 12 für jeden Wechselrichter 13 auf, wobei bei einer Wechselrichteranzahl von grösser oder gleich zwei die Eingangskreise 12 mit der zweiten Verschienung 9 parallel verbunden sind. Vorzugsweise umfasst jeder Eingangskreis 12 mindestens eine Gleichspannungskapazität. Der Vorteil der parallelen Verbindung bei einer Wechselrichteranzahl von grösser oder gleich zwei liegt darin, dass bei einem Ausfall eine Teilredundanz der nicht defekten Wechselrichter 13 erzielt werden kann. Ferner besteht die Möglichkeit durch eine Wechselrichteranzahl von grösser oder gleich zwei, mit einer geeigneten Transformatorschaltung des Netztransformator 16 eine Reduktion der Oberschwingungen zu erzielen. Die Gleichspannungskapazität bewirkt weiterhin vorteilhaft, die durch den zugehörigen Wechselrichter 13 erzeugten schaltfrequenten Stromoberschwingungen auf dem kürzesten Wege abzuleiten und damit weitestgehend vom Übertragungssystem 8 fern zu halten.

Darüber hinaus weist jeder Eingangskreis 12 erfindungsgemäss in mindestens einer Verbindung zur zweiten Verschienung 9 mindestens einen zweiten Schutzschalter 11 in Form eines Halbleiterschalters auf, wobei der zweite Schutzschalter 11 vorteilhaft ein ansteuerbarer Leistungshalbleiterschalter ist. Im Falle eines Defektes und/oder Ausfalls einer oder mehrerer Wechselrichter 13 kann ein über dem maximal zulässigen Stromwert liegender Stromfluss von der zweiten Verschienung 9 in den jeweiligen Eingangskreis 12 und/oder ein Stromfluss vom Eingangskreis 12 in die zweite Verschienung 7 mit dem jeweiligen zweiten Schutzschalter 11 schnell unterbrochen werden, wodurch eine selektive Abtrennung des entsprechenden Wechselrichters 13 vom Windenergiesystem erfolgt. Dadurch ist vorteilhaft ein unterbrechungsfreier Weiterbetrieb der restlichen Komponenten des Windenergiesystems ermöglicht. Für die Erkennung eines Überschreitens des vorstehend erwähnten maximal zulässigen Stromwertes des Stromflusses ist eine Detektoreinrichtung installiert, um den als ansteuerbarer Leistungshalbleiterschalter ausgebildeten zweiten Schutzschalter 11 über eine Ansteuereinrichtung auszuschalten zu können. Die entsprechenden Detektoreinrichtungen sowie Ansteuereinrichtungen der einzelnen zweiten Schutzschalter 11 sind der Einfachheit halber weggelassen.

Desweiteren weist jeder Eingangskreis 12 erfindungsgemäss in jeder Verbindung zur zweiten Verschienung 9 mindestens ein zweites Trennmittel 10 auf, wobei die zweiten Trennmittel 10 der galvanischen Trennung des Eingangskreises 12 von der zweiten Verschienung 9 dienen. Mit diesen zweiten Trennmitteln 10 ist es vorteilhaft möglich, den defekten Wechselrichter 13 galvanisch vom Windenergiesystem, insbesondere von der zweiten Verschienung 9 abzutrennen. Vorzugsweise sind die zweiten Trennmittel 10 zum Trennen eines nahezu stromlosen Zustandes ausgelegt, von Hand betätigbar und beispielsweise mechanisch ausgeführt, so dass der Schaltungs- und Steuerungsaufwand gering gehalten werden kann.

Gemäss Fig. 1 ist jeder Wechselrichter 13 mit seiner Wechselspannungsseite mit dem Netztransformator 16 verbunden ist, wobei in jeder Verbindung zum Netztransformator 16 mindestens ein drittes Trennmittel 14 vorgesehen ist. Die dritten Trennmittel 14 dienen der galvanischen Trennung des Wechselrichters 13 vom Netztransformator 16. Damit ist es vorteilhaft möglich, den defekten Wechselrichter 13 galvanisch vom Windenergiesystem, insbesondere vom Netztransformator 16 abzutrennen. Desweiteren kann der Netztransformator 16 in der Startphase des Windenergiesystems bei einer Vorladung der Gleichspannungskapazität des Eingangskreises 12 durch eine der Übersichtlichkeit halber nicht dargestellten Vorladeeinrichtung mittels der dritten Trennmittel 14 so lange vom Wechselrichter 13 getrennt gehalten werden, bis die Gleichspannungskapazität aufgeladen ist. Die dritten Trennmittel 14 können zusammen mit den zweiten Trennmitteln 10 den zugehörigen Wechselrichter 13 spannungsfrei schalten, um diesen zu warten, ohne dass dieser defekt oder ausgefallen ist, wobei das Windenergiesystem vorteilhaft weiterbetrieben werden kann.

Vorzugsweise sind die dritten Trennmittel 14 zum Trennen eines nahezu stromlosen Zustandes ausgelegt, von Hand betätigbar und beispielsweise mechanisch ausgeführt, so dass der Schaltungs- und Steuerungsaufwand, wie schon bei den ersten und zweiten Trennmitteln 6, 10 erwähnt, auch bei den dritten Trennmitteln 14 gering gehalten werden kann.

Beim erfindungsgemässen Verfahren zum Betrieb des erfindungsgemässen Windenergiesystems wird durch die mindestens zwei mittels Windrotoren 1 angetriebenen Generatoren 2 elektrische Energie zur Einspeisung in das elektrische Wechselspannungsversorgungsnetz erzeugt. Erfindungsgemäss wird bei Eintreten eines Defektes und/oder Ausfalls an einer der Gleichrichtereinheiten 3 der oder die zugehörigen ersten Schutzschalter 5 geöffnet. Durch diese Öffnung des oder der ersten Schutzschalter 5 bei Defekt beziehungsweise Ausfall der entsprechenden Gleichrichtereinheit 3 wird diese einfach und schnell vom Windenergiesystem, insbesondere von der ersten Verschienung 7 abgetrennt, so dass das Windenergiesystem vorteilhaft unterbrechungsfrei weiterbetrieben werden kann.

Weiterhin wird gemäss dem erfindungsgemässen Verfahren nach dem Öffnen des oder der zugehörigen ersten Schutzschalter 5 die defekte Gleichrichtereinheit 3 durch das oder die zugehörigen ersten Trennmittel 6 galvanisch von der ersten Verschienung 7 getrennt. Durch diese galvanische Trennung mittels der ersten Trennmittel 6 kann die defekte Gleichrichtereinheit 3 vorteilhaft gefahrlos repariert oder ersetzt werden.

Erfindungsgemäss wird bei Eintreten eines Defektes an einem der Wechselrichter 13 der oder die zugehörigen zweiten Schutzschalter 11 geöffnet. Durch diese Öffnung des oder der zweiten Schutzschalter 11 bei Defekt beziehungsweise Ausfall des entsprechenden Wechselrichters 13 wird dieser einfach und schnell vom Windenergiesystem, insbesondere von der zweiten Verschienung 9 abgetrennt, so dass das Windenergiesystem vorteilhaft unterbrechungsfrei weiterbetrieben werden kann. Ferner wird nach dem Öffnen des oder der zugehörigen zweiten Schutzschalter 11 der defekte Wechselrichter 13 durch das oder die zugehörigen zweiten Trennmittel 10 galvanisch von der zweiten Verschienung 9 getrennt. Mittels der galvanischen Trennung durch die zweiten Trennmittel 10 kann der defekte Wechselrichter 13 vorteilhaft gefahrlos repariert oder ersetzt werden. Darüber hinaus wird der defekte Wechselrichter 13 vorzugsweise zudem durch das oder die zugehörigen dritten Trennmittel 14 galvanisch vom Netztransformator 16 getrennt, wodurch eine zusätzliche Sicherheit gegeben wird, wenn am defekten oder wartungsbedürftigen Wechselrichter 13 Reparaturen durchgeführt werden oder dieser ersetzt wird.

Insgesamt stellt das erfindungsgemässe Windenergiesystem eine äusserst einfache und kostengünstige sowie betriebssichere Lösung dar, da insbesondere Komponenten bei deren Ausfall und/oder Defekt selektiv vom Windenergiesystem abgetrennt werden können, wobei ein unterbrechungsfreier Weiterbetrieb der restlichen Komponenten des Windenergiesystems gewährleistet ist. Zudem ist durch das erfindungsgemässe Verfahren ein einfacher, stabiler und sehr effizienter Betrieb des erfindungsgemässen Windenergiesystems ermöglicht, wodurch eine besonders hohe Verfügbarkeit des Windenergiesystems erreicht werden kann.

### Bezugszeichenliste

- 1: Windrotor
- 2: Generator
- 3: Gleichrichtereinheit
- 4: Energiespeicherkreis
- 5: erster Schutzschalter
- 6: erstes Trennmittel
- 7: ersten Verschienung
- 8: Übertragungssystem
- 9: zweite Verschienung
- 10: zweites Trennmittel
- 11: zweiter Schutzschalter
- 12: Eingangskreis
- 13: Wechselrichter
- 14: drittes Trennmittel
- 15: Netzkopplungseinrichtung
- 16: Netztransformator

## Patentansprüche

1. Windenergiesystem umfassend
mindestens zwei mittels Windrotoren (1) angetriebene Generatoren (2),
eine Gleichrichtereinheit (3) für jeden Generator (2), an deren Eingängen der zugehörige Generator (2) angeschlossen ist,
einen Energiespeicherkreis (4) für jede Gleichrichtereinheit (3), wobei der Energiespeicherkreis (4) an Ausgängen der zugehörigen Gleichrichtereinheit (3) angeschlossen ist, eine erste Verschienung (7), an welcher die Energiespeicherkreise (4) parallel verbunden sind,
ein Übertragungssystem (8), das mit der ersten Verschienung (7) verbunden ist,
eine Netzkopplungseinrichtung (15), mit der das Übertragungssystem (8) eingangsseitig verbunden ist, wobei die Netzkopplungseinrichtung (15) über einen Netztransformator (16) an ein elektrisches Wechselspannungsversorgungsnetz angekoppelt ist, **dadurch gekennzeichnet,**
**dass** jede Gleichrichtereinheit (3) als aktive Gleichrichtereinheit (3) mit ansteuerbaren Leistungshalbleiterbauelementen ausgebildet ist,
**dass** jeder Energiespeicherkreis (4) mindestens eine Gleichspannungskapazität aufweist,
**dass** jeder Energiespeicherkreis (4) in mindestens einer Verbindung zur ersten Verschienung (7) mindestens einen ersten Schutzschalter (5) in Form eines Halbleiterschalters aufweist, und
**dass** jeder Energiespeicherkreis (4) in jeder Verbindung zur ersten Verschienung (7) mindestens ein erstes Trennmittel (6) aufweist, wobei die ersten Trennmittel (6) der galvanischen Trennung des Energiespeicherkreises (4) von der ersten Verschienung (7) dienen.

2. Windenergiesystem nach Anspruch 1, **dadurch gekennzeichnet, dass** der erste Schutzschalter (5) eine Halbleiterdiode ist.

3. Windenergiesystem nach einem der vorhergehenden Ansprüche, **dadurch gekennzeichnet, dass** die Netzkopplungseinrichtung (15) über eine zweite Verschienung (9) mit dem Übertragungssystem (8) verbunden ist.

4. Windenergiesystem nach Anspruch 3, **dadurch gekennzeichnet, dass** die Netzkopplungseinrichtung (15) mindestens einen Wechselrichter (13) und je einen Eingangskreis (12) für jeden Wechselrichter (13) aufweist, und
dass bei einer Wechselrichteranzahl von grösser oder gleich zwei die Eingangskreise (12) mit der zweiten Verschienung (9) parallel verbunden sind.

5. Windenergiesystem nach Anspruch 4, **dadurch gekennzeichnet, dass** jeder Eingangskreis (12) mindestens eine Gleichspannungskapazität umfasst.

6. Windenergiesystem nach Anspruch 4 oder 5, **dadurch gekennzeichnet, dass** jeder Eingangskreis (12) in mindestens einer Verbindung zur zweiten Verschienung (9) mindestens einen zweiten Schutzschalter (11) in Form eines Halbleiterschalters aufweist.

7. Windenergiesystem nach Anspruch 6 **dadurch gekennzeichnet, dass** der zweite Schutzschalter (11) ein ansteuerbarer Leistungshalbleiterschalter ist.

8. Windenergiesystem nach einem der Ansprüche 4 bis 7, **dadurch gekennzeichnet, dass** jeder Eingangskreis (12) in jeder Verbindung zur zweiten Verschienung (9) mindestens ein zweites Trennmittel (10) aufweist, wobei die zweiten Trennmittel (10) der galvanischen Trennung des Eingangskreises (12) von der zweiten Verschienung (9) dienen.

9. Windenergiesystem nach einem der Anspruche 4 bis 8, **dadurch gekennzeichnet, dass** jeder Wechselrichter (13) mit seiner Wechselspannungsseite mit dem Netztransformator (16) verbunden ist und in jeder Verbindung zum Netztransformator (16) mindestens ein drittes Trennmittel (14) vorgesehen ist, wobei die dritten Trennmittel (14) der galvanischen Trennung des Wechselrichters (13) vom Netztransformator (16) dienen.

10. Verfahren zum Betrieb eines Windenergiesystems, bei welchem durch mindestens zwei mittels Windrotoren (1) angetriebene Generatoren (2) elektrische Energie zur Einspeisung in ein elektrisches Wechselspannungsversorgungsnetz erzeugt wird, wobei das Windenergiesystem eine Gleichrichtereinheit (3) für jeden Generator (2) aufweist, an deren Eingängen der zugehörige Generator (2) angeschlossen ist, und für jede Gleichrichtereinheit (3) ein an ihren Ausgängen angeschlossener Energiespeicherkreis (4) vorgesehen ist, und eine erste Verschienung (7) vorgesehen ist, an welcher die Energiespeicherkreise (4) parallel verbunden sind, und ein Übertragungssystem (8) vorgesehen ist, das mit der ersten Verschienung (7) verbunden ist, und eine Netzkopplungseinrichtung (15) vorgesehen ist, mit der das Übertragungssystem (8) eingangsseitig verbunden ist, wobei die Netzkopplungseinrichtung (15) über einen Netztransformator (16) an das elektrische Wechselspannungsversorgungsnetz angekoppelt ist, **dadurch gekennzeichnet,**
**dass** jede Gleichrichtereinheit (3) als aktive Gleichrichtereinheit (3) mit ansteuerbaren Leistungshalbleiterbauelementen ausgebildet ist und jeder Energiespeicherkreis (4) mindestens eine Gleichspannungskapazität aufweist und jeder Energiespeicherkreis (4) in mindestens einer Verbindung zur ersten Verschienung (7) mindestens einen ersten Schutzschalter (5) in Form eines Halbleiterschalters aufweist und bei Eintreten eines Defektes an einer der Gleichrichtereinheiten (3) der oder die zugehörigen ersten Schutzschalter (5) geöffnet werden, und
**dass** jeder Energiespeicherkreis (4) in jeder Verbindung zur ersten Verschienung (7) mindestens ein erstes Trennmittel (6) aufweist und nach dem Öffnen des oder der zugehörigen ersten Schutzschalter (5) die defekte Gleichrichtereinheit (3) durch das oder die zugehörigen ersten Trennmittel (6) galvanisch von der ersten Verschienung (7) getrennt wird.

11. Verfahren nach Anspruch 10 **dadurch gekennzeichnet, dass** die Netzkopplungseinrichtung (15) über eine zweite Verschienung (9) mit dem Übertragungssystem (8) verbunden ist und mindestens einen Wechselrichter (13) und je einen Eingangskreis (12) für jeden Wechselrichter (13) aufweist, wobei bei einer Wechselrichteranzahl von grösser oder gleich zwei die Eingangskreise (12) mit der zweiten Verschienung (9) parallel verbunden sind, und jeder Eingangskreis (12) in mindestens einer Verbindung zur zweiten Verschienung (9) mindestens einen zweiten Schutzschalter (11) in Form eines Halbleiterschalters aufweist und bei Eintreten eines Defektes an einem der Wechselrichter (13) der oder die zugehörigen zweiten Schutzschalter (11) geöffnet wird.

12. Verfahren nach Anspruch 11, **dadurch gekennzeichnet, dass** jeder Eingangskreis (12) in jeder Verbindung zur zweiten Verschienung (9) mindestens ein zweites Trennmittel (10) aufweist und nach dem Öffnen des oder der zugehörigen zweiten Schutzschalter (11) der defekte Wechselrichter (13) durch das oder die zugehörigen zweiten Trennmittel (10) galvanisch von der zweiten Verschienung (9) getrennt wird.

13. Verfahren nach Anspruch 11 oder 12, **dadurch gekennzeichnet, dass** jeder Wechselrichter (13) mit seiner Wechselspannungsseite mit dem Netztransformator (16) verbunden ist und in jeder Verbindung zum Netztransformator (16) mindestens ein drittes Trennmittel (14) vorgesehen ist und der defekte Wechselrichter (13) durch das oder die zugehörigen dritten Trennmittel (14) galvanisch vom Netztransformator (16) getrennt wird.

## Claims

1. Wind energy system comprising
at least two generators (2) which are driven by means of wind rotors (1),
a rectifier unit (3) for each generator (2), to whose inputs the associated generator (2) is connected,
an energy storage circuit (4) for each rectifier unit (3), with the energy storage system (4) being connected to the outputs of the associated rectifier unit (3),
a first busbar system (7), to which the energy storage circuits (4) are connected in parallel, a transmission system (8), which is connected to the first busbar system (7),
a network coupling device (15), to which the transmission system (8) is connected on the input side, with the network coupling device (15) being coupled via a network transformer (16) to an electrical AC voltage supply network, **characterized**
**in that** each rectifier unit (3) is in the form of an active rectifier unit (3) with drivable power semiconductor components,
**in that** each energy storage circuit (4) has at least one DC voltage capacitance,
**in that**, in at least one connection for the first busbar system (7), each energy storage circuit (4) has at least one first protection switch (5) in the form of a semiconductor switch, and in that, in each connection for the first busbar system (7), each energy storage circuit (4) has at least one first isolating means (6), with the first isolating means (6) being used for DC isolation of the energy storage circuit (4) from the first busbar system (7).

2. Wind energy system according to claim 1, **characterized in that** the first protection switch (5) is a semiconductor diode.

3. Wind energy system according to one of the preceding claims, **characterized in that** the network coupling device (15) is connected via a second busbar system (9) to the transmission system (8).

4. Wind energy system according to Claim 3, **characterized in that** the network coupling device (15) has at least one inverter (13), and in each case one input circuit (12) for each inverter (13), and
**in that**, if the number of inverters is greater than or equal to two, the input circuits (12) are connected in parallel to the second busbar system (9).

5. Wind energy system according to Claim 4, **characterized in that** each input circuit (12) has at least one DC voltage capacitance.

6. Wind energy system according to Claim 4 or 5, **characterized in that**, in at least one connection for the second busbar system (9), each input circuit (12) has at least one second protection switch (11) in the form of a semiconductor switch.

7. Wind energy system according to Claim 6, **characterized in that** the second protection switch (11) is a drivable power semiconductor switch.

8. Wind energy system according to one of Claims 4 to 7, **characterized in that**, in each connection for the second busbar system (9), each input circuit (12) has at least one second isolating means (10), with the second isolating means (10) being used for DC-isolation of the input circuit (12) from the second busbar system (9).

9. Wind energy system according to one of Claims 4 to 8, **characterized in that** each inverter (13) is connected by its AC voltage side to the network transformer (16) and at least one third isolating means (14) is provided in each connection for the network transformer (16), with the third isolating means (14) being used for DC-isolation of the inverter (13) from the network transformer (16).

10. Method for operating a wind energy system, in which electrical energy for feeding an electrical AC voltage supply network is produced by at least two generators (2) which are driven by means of wind rotors (1), with the wind energy system having a rectifier unit (3) for each generator (2), to whose inputs the associated generator (2) is connected, and an energy storage circuit (4) is provided for each rectifier unit (3) and is connected to its outputs, and a first busbar system (7) being provided, to which the energy storage circuits (4) are connected in parallel, and a transmission system (8) which is connected to the first busbar system (7) being provided, and a network coupling device (15) to which the transmission system (8) is connected on the input side being provided, with the network coupling device (15) being coupled to the electrical AC voltage supply network via a network transformer (16), **characterized in that** each rectifier device (3) is in the form of an active rectifier unit (3) with drivable power semiconductor components, each energy storage circuit (4) has at least one DC voltage capacitance, and, in at least one connection for the first busbar system (7), each energy storage circuit (4) has at least one first protection switch (5) in the form of a semiconductor switch, and the associated first protection switch or switches (5) being opened when a defect occurs in one of the rectifier units (3), and **in that**, in each connection for the first busbar system (7), each energy storage circuit (4) has at least one first isolating means (6) and, after opening of the associated first protection switch or switches (5), the defective rectifier unit (3) is DC-isolated from the first busbar system (7) by means of the associated first isolating means (6).

11. Method according to Claim 10, **characterized in that** the network coupling device (15) is connected via a second busbar system (9) to the transmission system (8) and has at least one inverter (13) and in each case one input circuit (12) for each inverter (13), with the input circuits (12) being connected in parallel to the second busbar system (9) if the number of inverters is greater than or equal to 2, and, in at least one connection for the second busbar system (9), each input circuit (12) having at least one second protection switch (11) in the form of a semiconductor switch, and the associated second protection switch or switches (11) being opened when a defect occurs in one of the inverters (13).

12. Method according to Claim 11, **characterized in that**, in each connection for the second busbar system (9), each input circuit (12) has at least one second isolating means (10) and, after opening of the associated second protection switch or switches (11), the defective inverter (13) is DC-isolated from the second busbar system (9) by means of the associated second isolating means (10).

13. The method according to Claim 11 or 12, **characterized in that** each inverter (13) is connected by its AC voltage side to the network transformer (16) and at least one third isolating means (14) is provided in each connection for the network transformer (16), and the defective inverter (13) is DC-isolated from the network transformer (16) by means of the associated third isolating means (14).

## Revendications

1. Système d'énergie éolienne présentant
au moins deux générateurs (2) entraînés par des rotors éoliens (1),
une unité redresseuse (3) prévue pour chaque générateur (2) et aux entrées de laquelle le générateur (2) associé est raccordé,
un circuit (4) d'accumulation d'énergie prévu pour chaque unité redresseuse (3), le circuit (4) d'accumulation d'énergie étant raccordé aux sorties de l'unité redresseuse (3) associée,
un premier ensemble (7) de rails auquel les circuits (4) d'accumulation d'énergie sont raccordés en parallèle,
un système de transmission (8) raccordé au premier ensemble (7) de rails,
un dispositif (15) de raccordement au réseau auquel les entrées du système de transmission (8) sont reliées, le dispositif (15) de raccordement au réseau étant raccordé par l'intermédiaire d'un transformateur réseau (16) à un réseau d'alimentation électrique à tension alternative,
**caractérisé en ce que**
chaque unité redresseuse (3) est configurée comme unité redresseuse active (3) dotée de composants semiconducteurs de puissance asservis,
**en ce que** chaque circuit (4) d'accumulation d'énergie présente au moins une capacité à tension continue,
**en ce que** chaque circuit (4) d'accumulation d'énergie présente dans au moins un raccordement au premier ensemble (7) de rails au moins un premier commutateur de protection (5) qui présente la forme d'un commutateur semi-conducteur et
**en ce que** chaque circuit (4) d'accumulation d'énergie présente dans chaque raccordement au premier ensemble (7) de rails au moins un premier moyen de séparation (6), les premiers moyens de séparation (6) servant à séparer galvaniquement le circuit (4) d'accumulation d'énergie vis-à-vis du premier ensemble (7) de rails.

2. Système d'énergie éolienne selon la revendication 1, **caractérisé en ce que** le premier commutateur de protection (5) est une diode semiconductrice.

3. Système d'énergie éolienne selon l'une des revendications précédentes, **caractérisé en ce que** le dispositif (15) de raccordement au réseau est relié au système de transmission (8) par un deuxième ensemble (9) de rails.

4. Système d'énergie éolienne selon la revendication 3, **caractérisé en ce que** le dispositif (15) de raccordement au réseau présente au moins un onduleur (13) et un circuit d'entrée (12) prévu pour chaque onduleur (13) et **en ce que** lorsque le nombre des onduleurs est supérieur ou égal à 2, les circuits d'entrée (12) sont raccordés en parallèle au deuxième ensemble (9) de rails.

5. Système d'énergie éolienne selon la revendication 4, **caractérisé en ce que** chaque circuit d'entrée (12) comporte au moins une capacité à tension continue.

6. Système d'énergie éolienne selon les revendications 4 ou 5, **caractérisé en ce que** chaque circuit d'entrée (12) présente dans au moins un raccordement au deuxième ensemble (9) de rails au moins un deuxième commutateur de protection (11) qui présente la forme d'un commutateur semi-conducteur.

7. Système d'énergie éolienne selon la revendication 6, **caractérisé en ce que** le deuxième commutateur de protection (11) est un commutateur semi-conducteur de puissance asservi.

8. Système d'énergie éolienne selon l'une des revendications 4 à 7, **caractérisé en ce que** chaque circuit d'entrée (12) présente dans chaque raccordement au deuxième ensemble (9) de rails au moins un deuxième moyen de séparation (10), le deuxième moyen de séparation (10) servant à séparer galvaniquement le circuit d'entrée (12) vis-à-vis du deuxième ensemble (9) de rails.

9. Système d'énergie éolienne selon l'une des revendications 4 à 8, **caractérisé en ce que** chaque onduleur (13) est relié par son côté tension alternative au transformateur réseau (16) et **en ce qu'**au moins un troisième moyen de séparation (14) est prévu dans chaque raccordement au transformateur réseau (16), les troisièmes moyens de séparation (14) servant à séparer galvaniquement l'onduleur (13) vis-à-vis du transformateur réseau (16).

10. Procédé de conduite d'un système d'énergie éolienne dans lequel des générateurs (2) entraînés au moyen de rotors éoliens (1) produisent de l'énergie électrique destinée à être injectée dans un réseau d'alimentation électrique à tension alternative, le système d'énergie éolienne présentant une unité redresseuse (3) prévue pour chaque générateur (2) et aux entrées de laquelle le générateur (2) associé est raccordé, un circuit (4) d'accumulation d'énergie prévu pour chaque unité redresseuse (3), le circuit (4) d'accumulation d'énergie étant raccordé aux sorties de l'unité redresseuse (3) associée, un premier ensemble (7) de rails auquel les circuits (4) d'accumulation d'énergie sont raccordés en parallèle, un système de transmission (8) raccordé au premier ensemble (7) de rails, un dispositif (15) de raccordement au réseau auquel les entrées du système de transmission (8) sont reliées, le dispositif (15) de raccordement au réseau étant raccordé par l'intermédiaire d'un transformateur réseau (16) à un réseau d'alimentation électrique à tension alternative,
**caractérisé en ce que**
chaque unité redresseuse (3) est configurée comme unité redresseuse active (3) dotée de composants semiconducteurs de puissance asservis,
**en ce que** chaque circuit (4) d'accumulation d'énergie présente au moins une capacité à tension continue,
**en ce que** chaque circuit (4) d'accumulation d'énergie présente dans au moins un raccordement au premier ensemble (7) de rails au moins un premier commutateur de protection (5) qui présente la forme d'un commutateur semi-conducteur et
**en ce que** chaque circuit (4) d'accumulation d'énergie présente dans chaque raccordement au premier ensemble (7) de rails au moins un premier moyen de séparation (6) et
**en ce que** lorsque survient un défaut sur l'une des unités redresseuses (3), le ou les premiers commutateurs de protection (5) associés sont ouverts et après l'ouverture du ou des premiers commutateurs de protection (5) associés, l'unité redresseuse (3) défectueuse est séparée galvaniquement vis-à-vis du premier ensemble (7) de rails par le ou les premiers moyens de séparation (6) associés.

11. Procédé selon la revendication 10, **caractérisé en ce que** le dispositif (15) de raccordement au réseau est relié au système de transmission (8) par un deuxième ensemble (9) de rails et présente au moins un onduleur (13) et un circuit d'entrée (12) prévu pour chaque onduleur (13) et **en ce que** lorsque le nombre des onduleurs est supérieur ou égal à 2, les circuits d'entrée (12) sont raccordés en parallèle au deuxième ensemble (9) de rails, **en ce que** chaque circuit d'entrée (12) présente dans au moins un raccordement au deuxième ensemble (9) de rails au moins un deuxième commutateur de protection (11) qui présente la forme d'un commutateur semi-conducteur et **en ce que** lorsque survient un défaut sur l'un des onduleurs (13), le ou les deuxièmes commutateurs de protection (11) associés sont ouverts.

12. Procédé selon la revendication 11, **caractérisé en ce que** chaque circuit d'entrée (12) présente dans au moins un raccordement au deuxième ensemble (9) de rails au moins un deuxième commutateur de protection (11) qui présente la forme d'un commutateur semi-conducteur et **en ce qu'**après l'ouverture du ou des deuxièmes commutateurs de protection (11) associés, l'onduleur défectueux (13) est séparé galvaniquement vis-à-vis du deuxième ensemble (9) de rails par le ou les deuxièmes moyens de séparation (10) associés.

13. Procédé selon les revendications 11 ou 12, **caractérisé en ce que** chaque onduleur (13) est relié par son côté tension alternative au transformateur réseau (16) et **en ce qu'**au moins un troisième moyen de séparation (14) est prévu dans chaque raccordement au transformateur réseau (16) et **en ce que** l'onduleur (13) défectueux est séparé galvaniquement vis-à-vis du transformateur réseau (16) par le ou les troisièmes moyens de séparation (14) associés.
